# EUROPÄISCHE PATENTSCHRIFT

(11) **EP 0 675 295 B1**
(45) Veröffentlichungstag und Bekanntmachung des Hinweises auf die Patenterteilung: **16.09.1998**
(21) Anmeldenummer: 95104450.2
(22) Anmeldetag: 26.03.1995
(51) Int. Cl.: F16B 37/04

(54) **Befestigungsvorrichtung**
Fixing device
Dispositif de fixation

(30) Priorität: 02.04.1994 DE 4411540
(43) Veröffentlichungstag der Anmeldung: 04.10.1995
(73) Patentinhaber: K.K.P. KONSTRUKTIVE KUNSTSTOFF-PRODUKTE HANDELSGESELLSCHAFT mbH, D-97638 Mellrichstadt (DE)
(72) Erfinder: Hölzer, Eberhard A., D-97332 Volkach (DE)
(74) Vertreter: Böck, Bernhard, Dipl.-Ing.

(56) Entgegenhaltungen:
- DE-A- 2 626 005
- DE-A- 3 038 341
- FR-A- 2 074 351
- FR-A- 2 670 253

## Beschreibung

Die vorliegende Erfindung betrifft eine Vorrichtung zur Aufnahme einer Befestigungsschraube in einem dünnwandigen Trägerteil, insbesondere einem Karosserieteil, mit einem in eine Befestigungsöffnung des Trägerteils einsetzbaren Schraubenaufnahmekörper nach dem Oberbegriff des Anspruchs 1.

Befestigungsvorrichtungen der vorstehenden Art sind beispielsweise unter dem Begriff "Hohlraumdübel" bekannt. Diese ermöglichen eine belastbare Schraubenbefestigung auch in den Fällen, in denen das Trägermaterial keine für den sicheren Halt der Befestigungsschraube ausreichende Materialstärke aufweist. Die bekannten Befestigungsvorrichtungen weisen jedoch den Nachteil auf, daß sie nur bei erstmaligem Gebrauch einen sicheren Halt der eingeschraubten Befestigungsschraube gewährleisten.

Die bekannten Befestigungsvorrichtungen sind daher nicht zur Aufnahme von Befestigungsschrauben geeignet, mit denen häufig zu montierende und zu demontierende Anbauteile befestigt werden sollen. Dies trifft besonders für den Kraftfahrzeugbereich zu, wo viele Anbauteile über Befestigungsschrauben an Karosserieteilen befestigt sind. Beispiele hierfür sind die Befestigung von Türinnenverkleidungen oder auch die Befestigung von Kennzeichenschildern bzw. Kennzeichenschildverstärkungen am Karosserieblech des Kraftfahrzeuges.

Für Befestigungsvorrichtungen, die zur Aufnahme von Befestigungsschrauben zur Befestigung von Kennzeichenschildern dienen, gelten besonders vielfältige Anforderungen. Zum einen müssen derartige Befestigungsvorrichtungen ein häufiges Ein- und Ausdrehen der Befestigungsschraube, etwa durch einen mehrfachen Wechsel des Fahrzeughalters bedingt, ermöglichen. Zum andern stellt die Befestigungsöffnung zur Aufnahme der Befestigungsvorrichtung im Karosserieblech eine direkte Verbindung zwischen dem Fahrzeuginnenraum und der Fahrzeugumgebung dar. Hieraus ergeben sich einerseits besondere Anforderungen hinsichtlich der Wasserdichtigkeit einer solchen Befestigungsvorrichtung. Andererseits bieten die Befestigungsöffnungen im Karosserieblech möglicherweise Fahrzeugdieben Gelegenheit, mit einfachen Hilfsmitteln, wie beispielsweise Drähten, von außen an den Verriegelungsmechanismus des Kofferraumschlosses zu gelangen und daran zu manipulieren.

Aus der FR-A-2 670 253 ist eine zweiteilig ausgebildete Befestigungsvorrichtung mit einem Innenteil und einem Außenteil bekannt, die zur Aufnahme einer Befestigungsschraube in einem dünnwandigen Trägerteil dient. Die bekannte Befestigungsvorrichtung weist ein formsteifes Innenteil und ein gegenüber diesem zumindest bereichsweise formelastisch ausgebildetes Außenteil auf, das zur Aufnahme des Innenteils dient und mit einem Anschlagrand versehen ist. Das Innenteil wird in seiner Relativlage zum Außenteil ebenso wie das Außenteil in seiner Relativlage zum Trägerteil über eine Verdrehsicherung und eine Rastverriegelung fixiert.

Das Außenteil der bekannten Befestigungsvorrichtung besteht aus einer an beiden Enden offenen Hülse, die an ihrem einen Ende mit dem Anschlagrand versehen ist. Aufgrund der hülsenartigen Ausbildung weist das Außenteil nur eine begrenzte Formelastizität auf.

Der vorliegenden Erfindung liegt daher die Aufgabe zugrunde, eine zweiteilige Befestigungsvorrichtung mit einem Innenteil und einem Außenteil vorzuschlagen, deren Außenteil eine erhöhte Formelastizität bei ausreichender Stabilität zur verdrehsicheren Aufnahme des Innenteils aufweist.

Diese Aufgabe wird mit einer Befestigungsvorrichtung gelöst, die die Merkmale des Anspruchs 1 aufweist.

Die Befestigungsvorrichtung ist mit einem formsteifen als Schraubenaufnahmekörper ausgebildeten Innenteil versehen und weist ein zumindest bereichsweise formelastisches, mit einem Anschlagrand versehenes Außenteil zur Aufnahme des Innenteils auf. Das Innenteil ist in seiner Relativlage zum Außenteil und das Außenteil in seiner Relativlage zum Trägerteil über eine Verdrehsicherung und eine Rastverriegelung fixiert.

Die zweiteilige Ausbildung der erfindungsgemäßen Befestigungsvorrichtung bestehend aus einem Innenteil und einem Außenteil ermöglicht eine Funktions-aufteilung, die ein häufiges Ein- und Ausdrehen einer Befestigungsschraube in die Befestigungsvorrichtung ohne Einbuße an Funktionssicherheit ermöglicht. Das Innenteil, das den eigentlichen Schraubenaufnahmekörper bildet, ist gegenüber dem Außenteil relativ formsteif ausgebildet, so daß ein Aufweiten einer Befestigungsbohrung im Schraubenaufnahmekörper, wie es bei einem relativ weichen, formelastischen Schraubenaufnahmekörper der Fall wäre, auch bei häufigen Ein- und Ausdrehen einer Befestigungsschraube im wesentlichen nicht eintritt. Dem Innenteil kommt somit eine reine Schraubenhaltefunktion zu. Zum Halten bzw. zur Befestigung der Befestigungsvorrichtung im Trägerteil, also etwa im Karosserieblech, dient allein das Außenteil, das zumindest in einem Bereich formelastisch ausgebildet ist und so eine Rastverbindung mit dem Trägerteil ermöglicht. Diese Rastverbindung wird durch das in das Außenteil eingesetzte Innenteil verriegelt, so daß das Innenteil quasi als Verriegelungsteil für das Außenteil dient. Axial wird sowohl das Außenteil gegenüber dem Trägerteil als auch das Innenteil gegenüber dem Außenteil durch eine Rastverriegelung festgelegt. Wie vorstehend bereits erwähnt, wird dabei die für eine Rastverriegelung notwendige Formelastizität allein vom Außenteil aufgebracht. Sowohl das Innenteil als auch das Außenteil sind bezüglich ihrer relativen Drehlage durch eine Verdrehsicherung gesichert.

Die Befestigungsvorrichtung ist somit in ihrer Anordnung in der Befestigungsöffnung des Trägerteils unabhängig von der Kombination mit einer Befestigungsschraube festgelegt und kann daher nach Herausdrehen einer Befestigungsschraube nicht durch einfaches nach Innen stoßen beseitigt werden, um den unberechtigten Zugang durch die Befestigungsöffnung in den Fahrzeuginnenraum zu ermöglichen. Auf Grund der formschlüssigen Verriegelung des Innenteils und des Außenteils untereinander und des Außenteils mit dem Trägerteil ist eine Freigabe der Befestigungsöffnung nach Herausdrehen einer Befestigungsschraube nur durch die Zerstörung der Befestigungsvorrichtung möglich. Hierdurch wird der Zugang zum Fahrzeuginnenraum wesentlich erschwert.

Erfindungsgemäß weist das Außenteil einen U-förmig ausgebildeten Einsetzbereich auf, bei dem zwei als Schenkelseiten ausgebildete Wandungsseiten und eine Basisseite vorgesehen sind. Die Enden der Schenkelseiten sind dabei durch den Anschlagrand miteinander verbunden und die Rasteinrichtungen durch in Rastkanten auslaufende Keilabschnitte der Schenkelseiten gebildet. Diese Ausgestaltung des Außenteils bildet einen in sich stabilen, kastenartigen Rahmen, der bereichsweise, nämlich im Bereich der Schenkelseiten leicht elastisch verformbar ist. Daher können die Schenkelseiten selbst bei abschnittsweise keilartiger Ausbildung als Rasteinrichtungen verwendet werden, so daß auf gesondert ausgebildete, gegenüber dem eigentlichen Außenteil verformbare Rastzungen verzichtet werden kann. Dies führt zu einer kompakten und besonders einfachen Formgestaltung des Außenteils, was dessen Herstellung als Kunststoffteil in einer entsprechend ausgestalteten Form zugute kommt.

Wenn auf den Innenflächen der zwei gegenüberliegender, als Schenkelseiten ausgebildeten Wandungsseiten jeweils mindestens ein Rastvorsprung vorgesehen ist, der mit einem komplementären Rastvorsprung auf den Oberflächen des Innenteils zusammenwirkt, kommt den Wandungsseiten eine zweifache Funktion zu, derart, daß sie neben der Rastverriegelung des Außenteils im Trägerteil zusätzlich zur Rastverriegelung des Innenteils im Außenteil dienen. Durch diese funktionsintegrierte Gestaltung der Wandungsseiten wird eine besonders kompakte Ausbildung des Außenteils möglich.

In einer bevorzugten Ausführungsform des Innenteils weist dieses einen geschlossenen, in seiner Kontur dem Außenteil angepaßten Querschnitt mit einer Aufnahmebohrung zur Aufnahme einer Befestigungsschraube auf und ist an zwei gegenüberliegenden Außenflächen mit jeweils mindestens einem Rastvorsprung versehen. Auf Grund der geschlossenen Querschnittsausbildung ist das Innenteil im Vergleich zum Außenteil verformungssteif ausgebildet, so daß auch bei einem häufigen Ein- und Ausdrehen einer Befestigungsschraube in die Bohrung des Innenteils nicht mit einer Aufweitung der Bohrung und dem damit zusammenhängenden Haltekraftverlust gerechnet werden muß. Die an den Außenflächen vorgesehenen Rastvorsprünge wirken mit den entsprechenden Rastvorsprüngen des Außenteils zusammen und sorgen somit für einen sicheren Halt des Innenteils im Außenteil.

Wenn das Innenteil auf den Außenflächen eine Längsnut zur Aufnahme eines komplementär ausgebildeten Längsstegs auf den Innenflächen der Wandungsseiten des Außenteils aufweist, wird trotz der seitlich offenen Gestaltung des U-förmig ausgebildeten Außenteils eine torsionssteife Umfangsverbindung zwischen dem Innenteil und dem Außenteil ermöglicht.

Vorteilhaft ist es auch, wenn das Innenteil an seinem Einführende mit einer Einführzuspitzung versehen ist, so daß das Einführen des Innenteils in das Außenteil bei der Montage erleichtert wird.

Ein besonderer Vorteil wir erreicht, wenn das Innenteil mit einer Anlagekrempe versehen ist, die so bemessen ist, daß sie bei in das Außenteil eingesetztem Innenteil dessen Anschlagrand überdeckt und unter Vorspannung am Anschlagrand und am Trägerteil anliegt.

Hierdurch wird eine doppelt wirkende Abdichtung zwischen dem Trägerteil und der Befestigungsvorrichtung realisiert, die sicher verhindert, daß Feuchtigkeit von außen über die Befestigungsvorrichtung in das Fahrzeuginnere eindringen kann. Eine "äußere" Abdichtung liegt dabei im Kontaktbereich der Peripherie der Anlagekrempe zum Trägerteil. Eine "innere" Abdichtung ist durch die Anlage der Anlagekrempeninnenfläche an der Oberfläche des Anschlagrands gegeben.

Nachfolgend wird eine bevorzugte Ausführungsform der erfindungsgemäßen Befestigungsvorrichtung anhand der Zeichnungen näher erläutert. Es zeigen:
**Fig. 1** eine Schnittdarstellung einer installierten Ausführungsform der erfindungsgemäßen Befestigungsvorrichtung mit eingeschraubter Befestigungsschraube;
**Fig. 2** die in **Fig. 1** dargestellte Befestigungsvorrichtung ohne Befestigungsschraube;
**Fig. 3** eine Schnittdarstellung eines Außenteils der in **Fig. 2** dargestellten Befestigungsvorrichtung;
**Fig. 4** eine Seitenansicht des in **Fig. 3** dargestellten Außenteils;
**Fig. 5** eine Draufsicht auf das in **Fig. 3** dargestellte Außenteil;
**Fig. 6** eine Unteransicht des in **Fig. 3** dargestellten Außenteils;
**Fig. 7** eine Einzeldarstellung des in **Fig. 2** dargestellten Innenteils der Befestigungsvorrichtung;
**Fig. 8** eine Seitenansicht des in **Fig. 7** dargestellten Innenteils;
**Fig. 9** eine Unteransicht des in **Fig. 7** dargestellten Innenteils.

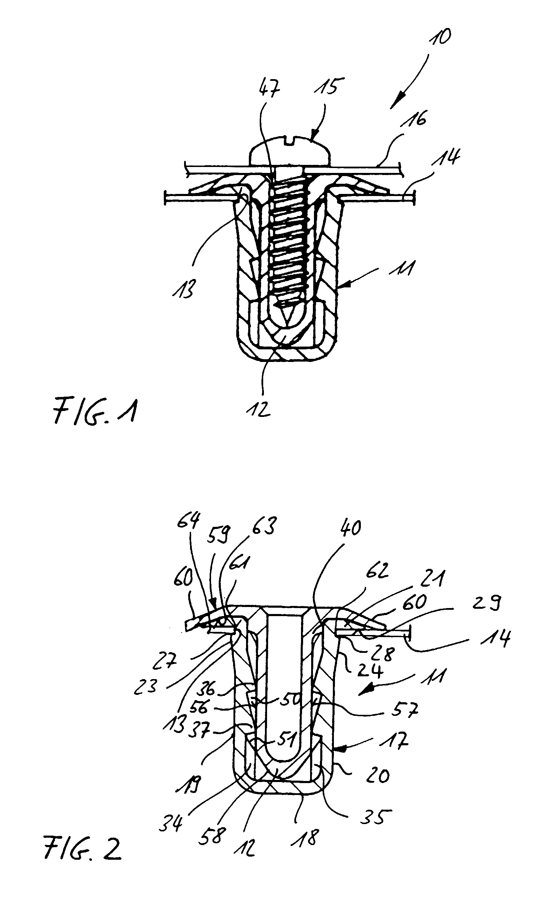

**Fig. 1** zeigt eine Befestigungsvorrichtung 10 mit einem Außenteil 11 und einem Innenteil 12. Das Außenteil 11 ist in einer Befestigungsöffnung 13 in ein Karosserieblech 14 eingesetzt. Das Innenteil 12 ist in das Außenteil 11 eingesetzt und nimmt eine Befestigungsschraube 15 auf, die dazu dient ein Anbauteil 16 am Karosserieblech 14 zu befestigen.

Das in **Fig. 1** dargestellte Ausführungsbeispiel zeigt die Anordnung der Befestigungsvorrichtung, wie sie etwa bei einer Kraftfahrzeugkennzeichen-Befestigung gegeben ist. In diesem Fall entspricht das Anbauteil 16 einem Kennzeichenschild, das am Karosserieblech des Fahrzeughecks, also von außen an der Kofferraumrückwand befestigt ist.

**Fig. 2** zeigt zum Zwecke einer übersichtlicheren Darstellung die in **Fig. 1** dargestellte Befestigungsvorrichtung ohne die Befestigungsschraube 15 und das Anbauteil 16.

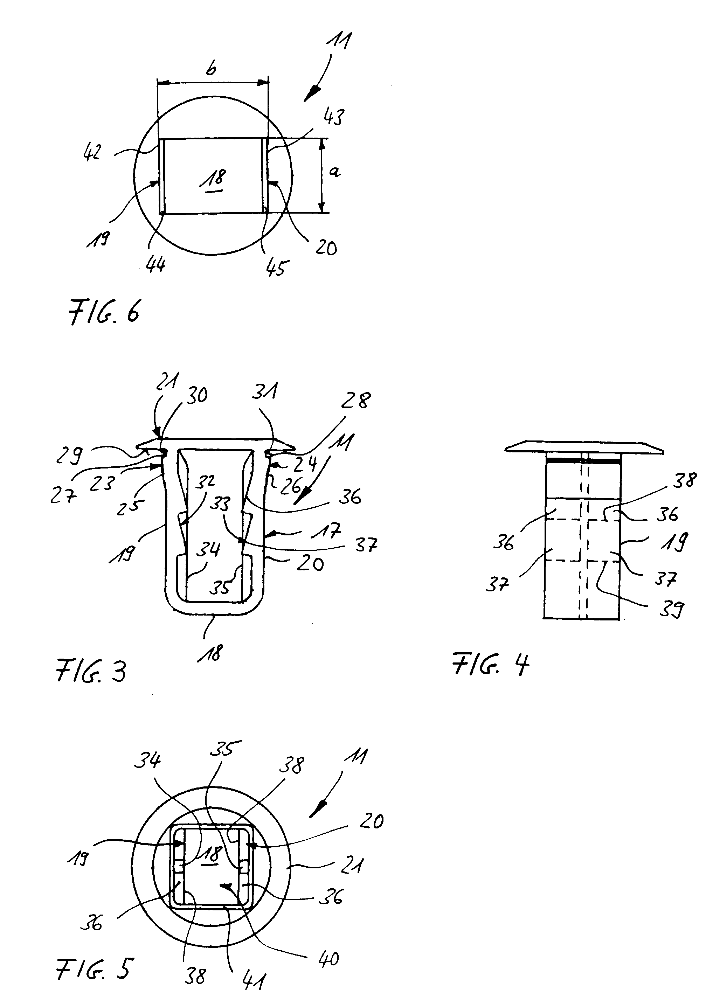

Das Außenteil 11 ist in verschiedenen Ansichten in den **Fig. 3** bis **6** dargestellt. Wie **Fig. 3** zeigt, weist das Außenteil 11 einen U-förmigen Einsetzbereich 17 mit einer Basisseite 18 und zwei davon abgehenden Schenkelseiten 19, 20 auf. Die Schenkelseiten 19, 20 sind in ihren oberen Endbereichen jeweils mit einer Rasteinrichtung 23, 24 versehen, die in der Wandstärke keilförmig erweiterte Keilabschnitte 25, 26 aufweisen, welche zu einem Anschlagrand 21 hin in Rastkanten 27, 28 auslaufen. Zwischen einer Anschlagfläche 29 und den Rastkanten 27, 28 ist jeweils eine Rastnut 30, 31 ausgebildet.

Wie aus einer Zusammenschau der **Fig. 3** und **4** hervorgeht, sind die Schenkelseiten 19, 20 auf ihren Innenflächen 32, 33 mit jeweils einem sich in Längsrichtung mittig auf den Innenflächen 32, 33 erstrekkenden Längssteg 34, 35 versehen. Beidseitig des Längsstegs 34 bzw. 35 sind zahnartig ausgebildete Rastvorsprünge 36, 37 ausgebildet, wobei die Rastvorsprünge 36 Rastkanten 38 aufweisen, die parallel zu Rastkanten 39 der Rastvorsprünge 37 sind.

**Fig. 5** gibt in einer Draufsicht des Außenteils 11 durch eine vom Anschlagrand 21 umrandete Einführöffnung 40 den Blick auf die Innenfläche der Basisseite 18 frei, wobei links und rechts der Basisseite 18 die innen an den Schenkelseiten 19, 20 ausgebildeten Rastvorsprünge 36 mit den Rastkanten 38 zu erkennen sind. Mittig zu den Rastvorsprüngen 36 und senkrecht zur Zeichenebene der **Fig. 5** verlaufen die Längsstege 34, 35.

Die Einführöffnung 40 ist in ihrem Umfangsrandbereich mit einer Einführphase 41 versehen und weist einen quadratischen Öffnungsquerschnitt auf.

**Fig. 6** zeigt in einer Unteransicht des Außenteils 11 die rechteckförmige Ausbildung der Basisseite 18 mit einer Querabmessung a und einer Längsabmessung b. An Querrändern 42, 43, an denen die Basisseite 18 in die Schenkelseiten 19, 20 übergeht, ist jeweils eine Einführphase 44, 45 vorgesehen.

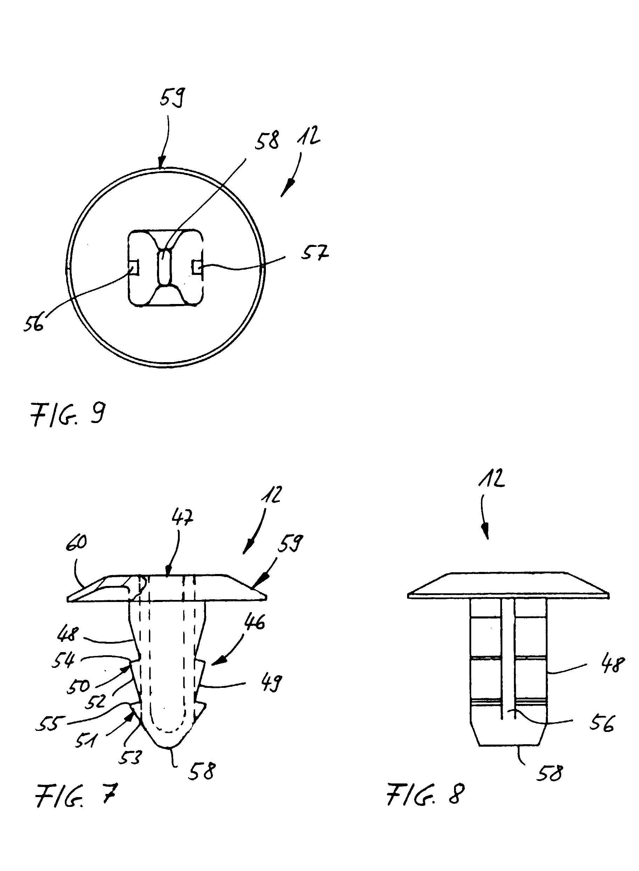

In den **Fig. 7** bis **9** ist das in **Fig. 2** dargestellte, in das Außenteil 11 eingesetzte Innenteil 12 in verschiedenen Ansichten dargestellt. Wie **Fig. 7** zeigt, weist das Innenteil 12 einen Einsetzbereich 46 mit geschlossenem Querschnitt auf, in den eine Aufnahmebohrung 47 zur Aufnahme der in **Fig. 1** dargestellten Befestigungsschraube 15 eingebracht ist. Obwohl hier der Begriff Aufnahmebohrung verwendet wird, wird darauf hingewiesen, daß die Aufnahmebohrung auf beliebige Art und Weise, also nicht zwangsläufig durch Bohren, eingebracht werden kann. Insbesondere bei den hier dargestellten, aus Kunststoff hergestellten Teilen der Befestigungsvorrichtung 10 wird die "Aufnahmebohrung" natürlich durch entsprechende Formungsverfahren eingebracht.

Der Einsetzbereich 46 des Innenteils 12 weist auf zwei gegenüberliegenden Außenflächen 48, 49 jeweils zwei Rastvorsprünge 50, 51 auf, die durch Teilabschnitte 52, 53 gebildet sind, welche in Rastkanten 54, 55 auslaufen.

Wie sich aus einer Zusammenschau der **Fig. 7, 8** und **9** ergibt, ist auf jeder Außenfläche 48, 49 des Innenteils 12 eine in Längsrichtung verlaufende, die Rastvorsprünge 50, 51 mittig durchschneidende Längsnut 56, 57 vorgesehen. Der freie Endbereich des Einsetzbereichs 46 ist als ein allseitig verjüngt auslaufendes Einführende 58 ausgebildet. Dies wird besonders deutlich aus der in **Fig. 9** dargestellten Unteransicht des Innenteils 12.

**Fig. 7** zeigt weiterhin, daß der Einsetzbereich 46 an seinem oberen Ende in eine kreisringförmig ausgebildete Anlagekrempe 59 übergeht. Die Anlagekrempe 59 weist einen tellerförmigen Querschnitt mit einem zum Einsetzbereich 46 kontinuierlich ansteigenden Tellerrand 60 auf.

Zur Montage der in **Fig. 2** dargestellten Befestigungsvorrichtung 10 wird zunächst das Außenteil 11 mit seinem Einsetzbereich 17 in die Befestigungsöffnung 13 eingeführt, die einen entsprechend den Abmessungen der Basisseite 18 ausgebildeten Öffnungsquerschnitt aufweist. Der Einsetzbereich 17 des Außenteils 11 wird, wenn die Querränder der Befestigungsöffnung 13 in Kontakt mit den Keilabschnitten 25, 26 kommen, unter zunehmender Verformung der Schenkelseiten 19, 20 in die Befestigungsöffnung 13 eingeschoben, bis die Rastkanten 27, 28 der Rastvorsprünge 23, 24 hinter den Querrändern 61, 62 der Befestigungsöffnung 13 einrasten. In dieser Lage liegt der Anschlagrand 21 mit seiner Anschlagfläche 29 am Karosserieblech 14 an und das Außenteil 11 ist durch die übereinstimmende, rechteckförmige Querschnittsausbildung des Einsetzbereichs 17 und des Öffnungsquerschnitts der Befestigungsöffnung 13 verdrehsicher in dieser gehalten.

Anschließend wird das Innenteil 12 mit seinem Einführende 58 in die Einführöffnung 40 des Außenteils 11 eingeführt und in dieses hineingedrückt, bis die Rastvorsprünge 50, 51 des Innenteils 12 hinter den Rastvorsprüngen 36, 37 des Außenteils 11 einrasten. In dieser Lage liegt der Tellerrand 60 der Anlagekrempe 59 des Innenteils 12 unter Vorspannung am Karosserieblech 14 an. Gleichzeitig liegt die Anlagekrempe 59 auf Grund ihrer im Querschnitt tellerförmigen Ausgestaltung mit ihrer Innenfläche 63 am Anschlagrand 21, der eine zur Innenfläche 63 der Anlagekrempe 59 komplementäre Außenfläche 64 aufweist, abdichtend an.

In dem in **Fig. 2** dargestellten montierten Zustand der Befestigungsvorrichtung 10 sind die Längsstege 34 bzw. 35 des Außenteils 11 in den Längsnuten 56 bzw. 57 des Innenteils 12 aufgenommen. Somit kann, wie in **Fig. 1** dargestellt, eine Befestigungsschraube 15 in die Aufnahmebohrung 47 des Innenteils 12 eingeschraubt werden, wobei die dabei auf das Innenteil 12 aufgebrachten Schubkräfte über die in die Längsnuten 56, 57 eingreifenden Längsstege 34, 35 auf das Außenteil 11 übertragen werden. Somit dient das Außenteil 11 auch zur Torsionsversteifung des Innenteils 12.

Damit sich das Außenteil 11 sowohl beim Einsetzen in die Befestigungsöffnung 13 als auch beim Einsetzen des Innenteils 12 in das Außenteil 11 elastisch verformen kann, besteht es aus einem geeigneten Material, wie etwa einem Polyäthylen hoher Dichte (HDPE). Um ein häufiges Aus- und Eindrehen einer Befestigungsschraube 15 in das Innenteil 12 ohne Setzerscheinungen sicherzustellen, kann für das Innenteil 12 etwa Polyoxymethylen (POM) als Herstellungsmaterial gewählt werden.

## Patentansprüche

1. Vorrichtung zur Aufnahme einer Befestigungsschraube (15) in einem dünnwandigen Trägerteil, insbesondere einem Karosserieteil (14), mit einem in eine Befestigungsöffnung (13) des Trägerteils (14) einsetzbaren Schraubenaufnahmekörper, aufweisend ein formsteifes, als Schraubenaufnahmekörper ausgebildetes Innenteil (12) und ein zumindest bereichsweise formelastisches, mit einem Anschlagrand (21) versehenes Außenteil (11) zur Aufnahme des Innenteils (12), wobei das Innenteil (12) in seiner Relativlage zum Außenteil (11) und das Außenteil (11) in seiner Relativlage zum Trägerteil (14) über eine Verdrehsicherung (13, 17; 34, 35; 56, 57) und eine Rastverriegelung (23, 24, 61, 62, 36, 37, 50, 51) fixiert ist,
**dadurch gekennzeichnet, daß**
daß Außenteil (11) einen U-förmig ausgebildeten Einsetzbereich (17) mit zwei als Schenkelseiten (19, 20) ausgebildeten Wandungsseiten und einer Basisseite (18) aufweist, wobei die Enden der Schenkelseiten (19, 20) durch den Anschlagrand (21) miteinander verbunden sind und die Rasteinrichtungen (23, 24) durch in Rastkanten (27, 28) auslaufende Keilabschnitte (25, 26) der Schenkelseiten (19, 20) gebildet sind.

2. Vorrichtung nach Anspruch 1,
**dadurch gekennzeichnet, daß**
auf den Innenflächen (32, 33) zweier gegenüberliegender Wandungsseiten (19, 20) des Außenteils (11) jeweils mindestens ein Rastvorsprung (36, 37) ausgebildet ist, der mit einem komplementären Rastvorsprung (50, 51) auf den Außenflächen (48, 49) des Innenteils (12) zusammenwirkt.

3. Vorrichtung nach Anspruch 1 oder 2,
**dadurch gekennzeichnet, daß**
das Innenteil (12) einen geschlossenen, in seiner Kontur dem Außenteil (11) angepaßten Querschnitt mit einer Aufnahmebohrung (47) zur Aufnahme der Befestigungsschraube (15) aufweist und an zwei gegenüberliegenden Außenflächen (48, 49) mit jeweils mindestens einem Rastvorsprung (50, 51) versehen ist.

4. Vorrichtung nach Anspruch 3,
**dadurch gekennzeichnet, daß**
das Innenteil (12) auf den Außenflächen (48, 49) eine Längsnut (56, 57) zur Aufnahme eines komplementär ausgebildeten Längsstegs (34, 35) auf den Innenflächen (32, 33) des Außenteils (11) aufweist.

5. Vorrichtung nach einem oder mehreren der vorangehenden Ansprüche,
**dadurch gekennzeichnet, daß**
das Innenteil (12) an seinem Einführende (58) mit einer Einführzuspitzung versehen ist.

6. Vorrichtung nach einem oder mehreren der vorangehenden Ansprüche,
**dadurch gekennzeichnet, daß**
das Innenteil (12) mit einer Anlagekrempe (59) versehen ist, die so bemessen ist, daß sie bei in das Außenteil eingesetztem Innenteil (12) dessen Anschlagrand (21) überdeckt und unter Vorspannung am Anschlagrand und am Trägerteil (14) anliegt.

## Claims

1. Device for receiving a fastening screw (15) in a thin-walled carrier part, in particular a vehicle-body part (14), the said device having a screw-receiving body which can be inserted in a fastening aperture (13) in the carrier part (14) and having an inner part (12) of rigid shape constructed as the screw-receiving body and, for the purpose of receiving the inner part (12), an outer part (11) which is of flexible shape, at least in certain regions and is provided with a stop rim (21), the inner part (12) being fixed in its position relative to the outer part (11), and the outer part (11) in its position relative to the carrier part (14), via a torsion-proofing system (13, 17; 34, 35; 56, 57) and a detent-type locking system (23, 24, 61, 62, 36, 37, 50, 51),
**characterised in that**
the outer part (11) has an insertion region (17) of U-shaped construction with two wall sides constructed as shank-type sides (19, 20), and a base side (18), the ends of the shank-type sides (19, 20) being connected to one another by the stop rim (21) and the detent arrangements (23, 24) being formed by wedge sections (25, 26) on the shank-type sides (19, 20), which wedge sections terminate in detent edges (27, 28).

2. Device according to claim 1,
**characterised in that**
there is constructed, on the inner faces (32, 33) of two opposed wall sides (19, 20) of the outer part (11), at least one detent projection (36, 37) in each case which interacts with a complementary detent projection (50, 51) on the outer faces (48, 49) of the inner part (12).

3. Device according to claim 1 or 2,
**characterised in that**
the inner part (12) has a closed cross-section adapted in its contour to the outer part (11) and having a receiving bore (47) for receiving the fastening screw (15), and is provided, on two opposed outer faces (48, 49), with at least one detent projection (50, 51) in each case.

4. Device according to claim 3,
**characterised in that**
the inner part (12) has, on the outer faces (48, 49), a longitudinal groove (56, 57) for receiving a longitudinal web (34, 35) of complementary construction on the inner faces (32, 33) of the outer part (11).

5. Device according to one or more of the preceding claims,
**characterised in that**
the inner part (12) is provided, at its lead-in end (58), with a lead-in taper.

6. Device according to one or more of the preceding claims,
**characterised in that**
the inner part (12) is provided with an abutment flange (59) which is so dimensioned that, when the inner part (12) is inserted in the outer part, the said abutment flange overlaps the stop rim (21) of the said inner part (12) and abuts, with pre-tensioning, against the stop rim and against the carrier part (14).

## Revendications

1. Dispositif destiné à recevoir une vis de fixation (15) dans une partie de support à paroi mince, notamment une partie de carrosserie (14), comportant un corps de logement de vis, qui peut être inséré dans une ouverture de fixation (13) de la partie de support (14), et comportant un élément intérieur (12) de forme rigide, agencé sous la forme d'un corps de logement de vis, et un élément extérieur (11) qui possède une élasticité de forme au moins par endroits et est pourvu d'un bord de butée (21), pour la réception de l'élément intérieur (12), l'élément intérieur (12) pouvant être fixé dans sa position relative par rapport à l'élément extérieur (11), et l'élément extérieur (11) pouvant être fixé dans sa position relative par rapport à l'élément de support (14) par l'intermédiaire d'un dispositif de blocage en rotation (13,17;34,35;56,57) et d'un dispositif de verrouillage à encliquetage (23,24,61,62,36,37, 50,51),
caractérisé en ce que
l'élément extérieur (11) possède une zone d'insertion en forme de U (17) comportant deux côtés de paroi agencés sous la forme de côtés formant branches (19,20) et un côté formant base (18), les extrémités des côtés formant branches (19,20) étant reliées entre elles par le bord de butée (21), tandis que les dispositifs d'encliquetage (23, 24) sont formés par des éléments en forme de coins (25,26) des côtés formant branches (19,20), qui se terminent par des arêtes d'encliquetage (27, 28).

2. Dispositif selon la revendication 1, caractérisé en ce que
les surfaces intérieures (32,33) de deux côtés de paroi opposés (19,20) de l'élément extérieur (11) comporte
chacune au moins un appendice saillant d'encliquetage (36,37), qui coopère avec un appendice saillant d'encliquetage complémentaire (50,51) situé sur les faces extérieures (48,49) de l'élément intérieur (12).

3. Dispositif selon la revendication 1 ou 2, caractérisé en ce que
l'élément intérieur (12) possède une section transversale fermée, dont le contour est adapté à l'élément extérieur (11) et qui comprend un perçage de logement (47) servant à loger la vis de fixation (15), et comporte, sur deux surfaces extérieures opposées (48,49), respectivement au moins un appendice saillant d'encliquetage (50,51).

4. Dispositif selon la revendication 3, caractérisé en ce que
l'élément intérieur (12) possède, au niveau des surfaces extérieures (48,49), une rainure longitudinale (56,57) servant à loger une barrette longitudinale de forme complémentaire (34,35) présente sur les surfaces intérieures (32,33) de l'élément extérieur (11).

5. Dispositif selon une ou plusieurs des revendications précédentes, caractérisé en ce que
l'élément intérieur (12) comporte, au niveau de son extrémité d'introduction (58), une pointe d'introduction.

6. Dispositif selon une ou plusieurs des revendications précédentes, caractérisé en ce que
l'élément intérieur (12) comporte un rebord d'application (59) qui est dimensionné de telle sorte que, lorsque l'élément intérieur (12) est inséré dans l'élément extérieur, ce rebord recouvre le bord de butée (21) de l'élément extérieur et s'applique, sous précontrainte, contre le bord de butée et contre l'élément de support (14).
